# EUROPEAN PATENT APPLICATION

(11) **EP 4 779 376 A1**
(43) Date of publication of application: **22.07.2026**
(21) Application number: 26151736.1
(22) Date of filing: 14.01.2026
(51) Int. Cl.: G02B 6/42

(54) **METHOD TO PROTECT FACET DURING ASSEMBLY IN OPTICAL ENGINE, AND A SEMICONDUCTOR DEVICE INCLUDING AN OPTICAL ENGINE**

(30) Priority: 17.01.2025 US 202563746628 P; 25.09.2025 US 202519339826
(71) Applicant: Avago Technologies International Sales Pte. Limited, Singapore 768923 (SG)
(72) Inventor: Kannan, Sukeshwar, San Jose, 95124 (US); Margalit, Near, Westlake Village, 91361 (US)
(74) Representative: Dilg, Haeusler, Schindelmann Patentanwaltsgesellschaft mbH

(57) **Abstract**

One or more embodiments provide a method for manufacturing a semiconductor device. The method includes preparing a wafer having a first surface coupled to a carrier wafer and a second surface opposite the first surface, and mounting a semiconductor chip stack on the second surface of the wafer. The mounting is performed such that an optical interface of the semiconductor chip stack is above a peripheral region on the second surface of the wafer. The method further includes forming a photoresist pattern to cover a peripheral region of the second surface and a region of the semiconductor chip stack that includes the optical interface, forming a mold in a space surrounded by the photoresist pattern, grinding the mold such that the semiconductor chip package is exposed, removing the photoresist pattern after grinding the second, and removing the carrier wafer from the first surface of the wafer.

## Description

### Technical Field

The present disclosure relates generally to a method for manufacturing a semiconductor device and a semiconductor device.

### Background

A semiconductor device using optical signals for signal transmission is becoming widespread. One type of the semiconductor device includes a semiconductor chip stack (may be referred as an "optical engine") in which an electronic semiconductor chip is mounted on a photonic semiconductor chip. Further, such a semiconductor chip stack is mounted on a wafer together with other components, such as a controller semiconductor chip (e.g., ASIC), to build a large-scale integrated device. One example of such a large-scale integrated circuit has a chip on wafer on substrate (CoWoS) structure. Since the semiconductor chip stack, in particular, an optical interface of the photonic semiconductor chip is highly susceptible to contamination or physical damages, it is desirable to protect any susceptible parts of the semiconductor chip stack during manufacturing thereof or the subsequent manufacturing of the large-scale integrated device.

### Summary

One or more embodiments provide a method for manufacturing a semiconductor device, directed to addressing issues of susceptible components. The method includes preparing a wafer having a first surface coupled to a carrier wafer and a second surface opposite the first surface, and mounting a semiconductor chip stack on the second surface of the wafer. The semiconductor chip stack includes a photonic semiconductor chip having a surface on which an optical interface connectable to an optical fiber is provided at an edge thereof, an electronic semiconductor chip mounted on the surface of the photonic semiconductor chip, a first spacer chip mounted on the surface of the photonic semiconductor chip between the optical interface and the electronic semiconductor chip, and a first mold between the electronic semiconductor chip and the first spacer chip. The mounting is performed such that the optical interface of the semiconductor chip stack is above a peripheral region on the second surface. The method further includes forming a photoresist pattern to cover a peripheral region of the second surface and a region of the semiconductor chip stack that is thereabove and includes an optical interface, forming a second mold in a space surrounded by the photoresist pattern, grinding the second mold such that the semiconductor chip package is exposed, removing the photoresist pattern after said grinding the second mold, and removing the carrier wafer from the first surface of the wafer. Through the process steps of the method, the semiconductor chip stack, among other things, the optical interface of the photonic semiconductor chip mounted thereon can be protected from physical damage and/or contamination by the photoresist pattern, which allows for better connectivity and signal transmission performance with coupled optical fibers. Further, the photoresist patterned in the above method is more preferable to protection by glass, which may also be damaged and cause physical damage and/or contamination by itself.

One or more embodiments provide a method for manufacturing a semiconductor device, directed to addressing issues of susceptible components. The method includes preparing a photonic semiconductor chip wafer having a first surface on which an optical interface connectable to an optical fiber is provided at an edge and a second surface that is opposite to the first surface and coupled to a first carrier wafer, and mounting an electronic semiconductor chip and a first spacer chip on the first surface of the photonic semiconductor chip wafer, such that the first spacer chip is between the optical interface and the electronic semiconductor chip. The method further includes forming a first photoresist pattern to cover a peripheral region of the first surface including the optical interface, forming a first mold in a space surrounded by the first photoresist pattern, grinding the first mold such that the electronic semiconductor chip and the first spacer chip are exposed, removing the first photoresist pattern after said grinding, and removing the first carrier wafer from the second surface of the photonic semiconductor chip wafer after said removing the first photo resist pattern. Through the process steps of the method, the optical interface of the photonic semiconductor chip can be protected from physical damage and/or contamination by the photoresist pattern, which allows for better connectivity and signal transmission performance with coupled optical fibers. Further, the photoresist patterned in the above method is more preferable to protection by glass, which may also be damaged and cause physical damage and/or contamination by itself.

One or more embodiments provide a semiconductor device having structures to address issues of susceptible components. The semiconductor device includes a substrate, a wafer mounted on the substrate, and one or more semiconductor chip stacks mounted on the wafer. Each of the one or more the semiconductor chip stacks includes a region overhanging the wafer. Each of the one or more the semiconductor chip stacks includes a photonic semiconductor chip, an electronic semiconductor chip, a first spacer chip, and a first mold. The photonic semiconductor chip has a first surface on which an optical interface connectable to an optical fiber is provided at an edge thereof. The optical interface is in the region overhanging the wafer. The electronic semiconductor chip is mounted on the first surface of the photonic semiconductor chip. The first spacer chip is mounted on the first surface of the photonic semiconductor chip between the optical interface and the electronic semiconductor chip. The first mold between the electronic semiconductor chip and the first spacer chip. According to the structure of the semiconductor device including the overhanging structure, an assembling step to connect the optical interface of the photonic semiconductor chip with optical fibers can be more reliably performed with ease, without interfering with other components during the assembling step.

### Brief Description of the Drawings

Fig. 1A schematically illustrates process steps of a method for manufacturing a semiconductor chip stack according to an embodiment using cross-sectional views.
Fig. 1B schematically illustrates process steps of the method for manufacturing the semiconductor chip stack, following the process steps depicted in Fig. 1A .
Fig. 1C schematically illustrates process steps of the method for manufacturing the semiconductor chip stack, following the process steps depicted in Fig. 1B.
Fig. 2 schematically illustrates a plan view of a photonic semiconductor chip wafer in a process step of forming a photoresist pattern.
Fig. 3 is a flow chart illustrating process steps of the method for manufacturing the semiconductor chip stack according to the embodiment.
Fig. 4 schematically illustrates a semiconductor chip stack manufactured using the method according to the embodiment.
Fig. 5A schematically illustrates process steps of a method for manufacturing a semiconductor device (e.g., CoWoS) including a semiconductor chip stack, according to an embodiment using cross-sectional views.
Fig. 5B schematically illustrates process steps of the method for manufacturing the semiconductor device, following the process steps depicted in Fig. 5A.
Fig. 5C schematically illustrates process steps of the method for manufacturing the semiconductor device, following the process steps depicted in Fig. 5B.
Fig. 5D schematically illustrates process steps of the method for manufacturing the semiconductor device, following the process steps depicted in Fig. 5C.
Fig. 6 schematically illustrates a plan view of a wafer of the semiconductor device in a process step of forming a photoresist pattern.
Fig. 7 is a flow chart illustrating process steps of the method for manufacturing the semiconductor device according to the embodiment.
Fig. 8 schematically illustrates a semiconductor device manufactured using the method according to the embodiment.

### Detailed Description

The detailed description set forth below is intended as a description of various configurations of the subject technology and is not intended to represent the only configurations in which the subject technology may be practiced. The appended drawings are incorporated herein and constitute part of the detailed description, which includes specific details for providing a thorough understanding of the subject technology. However, the subject technology is not limited to the specific details set forth herein and may be practiced without one or more of the specific details. In some instances, structures and components are shown in a block-diagram form in order to avoid obscuring the concepts of the subject technology.

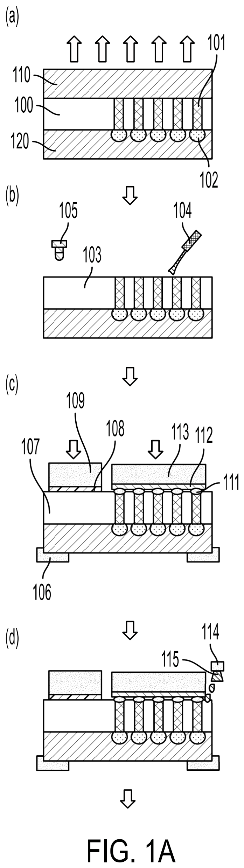

Figs. 1A-1C schematically illustrate process steps of a method for manufacturing a semiconductor chip stack according to an embodiment. In the method for manufacturing the semiconductor chip stack, a photonic semiconductor chip wafer 100 is prepared through process steps shown in (a) and (b) of Fig. 1A. The photonic semiconductor chip wafer 100 (may be referred to as a "PIC" or "PIC wafer") has a relatively small thickness (e.g., 50-100µm), and for that reason the photonic semiconductor chip wafer 100 is sandwiched between two carrier wafers (i.e., a first carrier wafer 110 and a second carrier wafer 120 in Fig. 1A) and coupled to the first carrier wafer 110 and the second carrier wafer 120 to avoid warpage of the photonic semiconductor chip wafer 100. The photonic semiconductor chip wafer 100 includes a plurality of vias 101 and a plurality of pads 102 corresponding to the vias 101, respectively, for electrical and/or physical connection. Then, at a process step shown in (a) of Fig. 1A, an upper one of the carrier wafers (e.g., the first carrier wafer 110) is removed (e.g., debonded) to expose an upper surface 103 of the photonic semiconductor chip wafer 100 for mounting other component chips in the later process steps. At a process step shown in (b) of Fig. 1A, the exposed upper surface 103 of the photonic semiconductor chip wafer 100 is scrubbed with a scrubber 104 to remove any unnecessary residue of the removed carrier wafer (e.g., the first carrier wafer 110) and glues used for bonding. The exposed upper surface 103 of the photonic semiconductor chip wafer 100 is also inspected to find any defects by an optical inspector 105 (e.g., a camera), which may be suitably performed automatically, i.e., automatic optical inspection (AOI).

Next, at a process step shown in (c) of Fig. 1A, the photonic semiconductor chip wafer 100 is set on a tray 106 (e.g., wafer ring), and then an electronic semiconductor chip 113 (may be referred to as "EIC") and a spacer chip 109 (may be referred to as "spacer Si") are mounted on the upper surface 103 of the photonic semiconductor chip wafer 100. The electronic semiconductor chip 113 is mounted on the photonic semiconductor chip wafer 100, such that a plurality of pads 112 at a lower surface thereof are bonded to a plurality of pads (not shown) of the photonic semiconductor chip wafer 110 at the upper surface 103 thereof, using solder joints 111 (may be referred to as "solder balls"). The spacer chip 109 is mounted on the upper surface 103 of the photonic semiconductor chip wafer 100 using a die attach film (DAF) 108 for bonding. The spacer chip 109 allows for mechanical protection of the photonic semiconductor chip wafer 100 and the electronic semiconductor chip 113 during the process steps. In a specific embodiment, an upper surface of the mounted spacer chip 109 is flush with an upper surface of the mounted electronic semiconductor chip 113. The photonic semiconductor chip wafer 100 includes an optical interface 107 (may be referred to as optical I/F) connectable to an optical fiber, which is external to the semiconductor chip stack, at an edge of the upper surface 103. In a specific implementation, the optical interface 107 is positioned so that the spacer chip 109 is between the optical interface 107 and the electronic semiconductor chip 113.

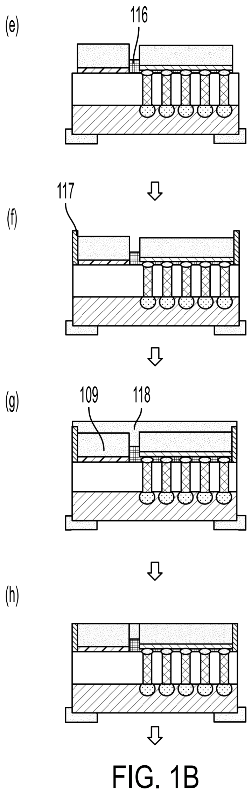

At a process step shown in (d) of Fig. 1A, a flux, which is used for soldering in the previous step, is removed from the upper surface 103 of the photonic semiconductor chip wafer 100. Although any applicable method can be employed for the flux cleaning, in a specific implementation, a liquid chemical 115 (e.g., isopropyl alcohol) may be dispensed from a shower dispenser 114 onto the upper surface 103 of the photonic semiconductor chip wafer 100. At a process step shown in (e) of Fig. 1B, an underfill 116 is formed in a space between the photonic semiconductor chip wafer 100 and the electronic semiconductor chip 113 so as to cover around the solder joints 111 therebetween. In a specific implementation, the underfill 116 is formed so as not top up the electronic semiconductor chip 113 and/or the spacer chip 109 up to the upper surfaces thereof.

Subsequently, at a process step shown in (f) of Fig. 1B, a photoresist (may be referred as "PR") is formed on the upper surface 103 of the photonic semiconductor chip wafer 100 using a suitably applicable method, such as spin coating, and the photoresist is patterned into a patterned photoresist 117 so as to remain on a peripheral region of the upper surface 103. The patterned photoresist 117 (may be referred to as "photoresist pattern") is on the optical interface 107 in the peripheral region. In a specific implementation, a height of the patterned photoresist 117 is higher than a height of the electronic semiconductor chip 113 and the height of the spacer chip 109.

Next, at a process step shown in (g) of Fig. 1B, a mold 118 is formed in a space surrounded by the photoresist pattern 117. A fluid material of the mold 118 is dispensed in the space and then solidified. In forming the mold 118, the patterned photoresist 117 can serve as a dam to avoid the fluid material of the mold 118 from flowing out of the space. In this process, the patterned photoresist 117 also serves as a means to protect susceptible regions of the photonic semiconductor chip wafer 100 from the mold 118. For the purpose of protecting the susceptible regions (e.g., the optical interface) from the mold 118 or any influence during the formation of the mold 118, the material of the photoresist preferably has a high glass transition temperature so that the patterned photoresist 117 can withstand a high temperature employed to cure the mold 118. In a specific implementation, a height of the formed mold 118 is higher than the height of the patterned photoresist 117.

At a process step shown in (h) of Fig. 1B, the mold 118 is grinded to expose the upper surface of the electronic semiconductor chip 113 and the upper surface of the spacer chip 109. In a case where the patterned photoresist 117 is taller than the electronic semiconductor chip 113 and/or the spacer chip 109, an upper part of the patterned photoresist 117 is grinded and removed together with the mold 118. Further, in a specific implementation, the upper surfaces of the electronic semiconductor 113 chip and the spacer chip 109 may also be slightly grinded.

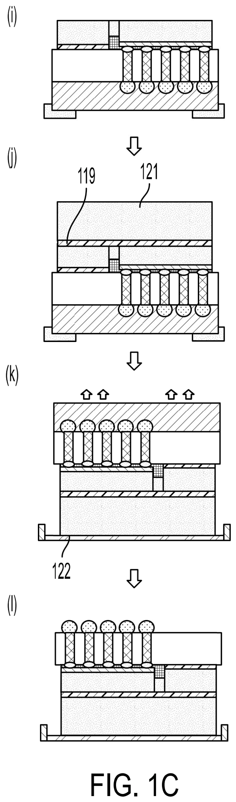

Subsequently, at a process step shown in (i) of Fig. 1C, the patterned photoresist 117 is removed by a suitably applicable method, such as wet stripping, which allows for less residue of the material of the photoresist on the optical interface 107.

Next, at a process step shown in (j) of Fig. 1C, a dummy chip 121 (may be referred to as a "dummy Si" or "second spacer chip") is mounted on the electronic semiconductor chip 113 and the spacer chip 109, using a DAF 119 (e.g., high K DAF) therebetween. The dummy chip 121 has a larger footprint than the electronic semiconductor chip 113 and the spacer chip 109 and thus covers both the upper surfaces of the electronic semiconductor chip 113 and the spacer chip 109. The dummy chip 121 provides mechanical strength of the semiconductor chip stack and thus allows for better handling during manufacture.

Subsequently, at a process step shown in (k) of Fig. 1C, the facet (i.e., the components) on the tray 106 are removed therefrom and mounted on a tape frame 122, so that a surface of the second carrier wafer 120, which is still coupled to the photonic semiconductor chip wafer 100, faces above. That is, the facet is flipped and a surface of the dummy chip 121 facing away from the photonic semiconductor chip wafer 100 is mounted on the tape frame 122. Further, the second carrier wafer 120 is removed (e.g., debonded) from the rest of the facet, and any residue (e.g., a residual glue) on the now upper surface of the photonic semiconductor chip wafer 100 is removed.

In addition, at the process step shown in(k) of Fig. 1C, the photonic semiconductor chip wafer 100 is cut (may be referred to as "diced") into a plurality of pieces, and one of the pieces serves as a photonic semiconductor chip on which the electronic semiconductor chip 113, the spacer chip 109, and the dummy chip 121 are mounted. A resulting semiconductor chip stack (may be referred to as an "optical engine") is shown in (l) of Fig. 1C.

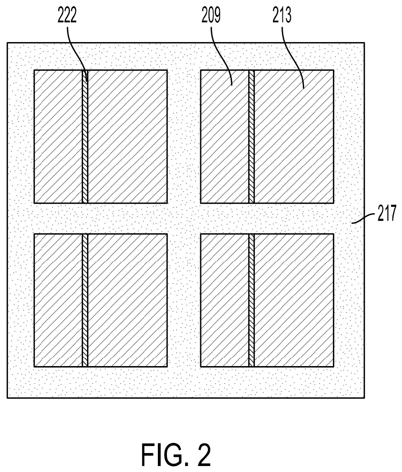

Fig. 2 schematically illustrates a plan view of a photonic semiconductor chip wafer in a process step of forming a photoresist pattern. A photonic semiconductor chip wafer in the process step of forming a photoresist pattern 217, that is, before the process step of dicing, includes a plurality of (e.g., four) regions corresponding to four semiconductor device stacks. In each of the plurality of regions, a corresponding electronic semiconductor chip 213 and a spacer chip 209 are mounted. In a specific implementation, the photoresist pattern 217 is formed so as so surround external side surfaces of each of the electronic semiconductor chips 213 and the spacer chips 209. In a specific implementation, the electronic semiconductor chip 213, the spacer chip 209, and the photo resist pattern 217 in FIG. 2 correspond to the electronic semiconductor chip 113, the spacer chip 109, and the photo resist pattern 117 in Figs. 1A-1C.

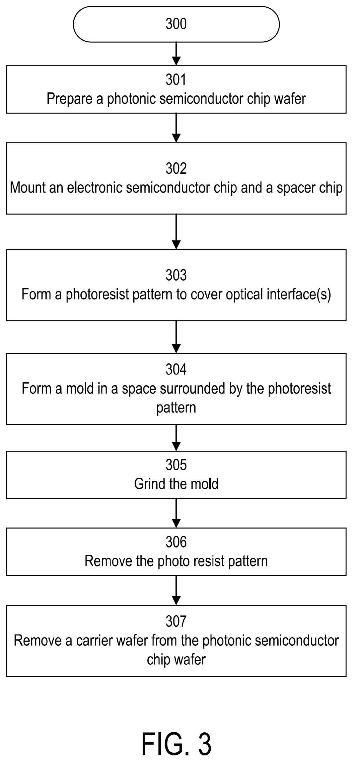

Fig. 3 is a flow chart illustrating process steps of a method 300 for manufacturing a semiconductor device (e.g., optical engine) according to an embodiment. In a specific implementation, the process steps of the method 300 illustrated in Fig. 3 correspond to the process steps described with reference to Figs. 1A-1C, respectively, but may be different therefrom. The method 300 includes step 301, where a photonic semiconductor chip wafer is prepared. The prepared photonic semiconductor chip wafer has a first surface (e.g., an upper surface) on which an optical interface is provided at an edge and a second surface (e.g., a lower surface) that is opposite to the first surface. The optical interface is connectable to an optical fiber that is external to the semiconductor device. The second surface is coupled to a carrier wafer (e.g., the second carrier wafer 120). The first surface may be cleaned (e.g., scrubbed). In a specific implementation, the photonic semiconductor chip wafer is prepared for a plurality of semiconductor devices, and in that case (may be referred to as "multi-chip fabrication case"), the subsequent steps may be performed for each of the semiconductor devices until a dicing process.

In step 302, an electronic semiconductor chip and a spacer chip (may be referred to as "first spacer chip") are mounted on the first surface of the photonic semiconductor chip wafer. This mounting process may be performed such that the first spacer chip is between the optical interface and the electronic semiconductor chip on the photonic semiconductor chip wafer. Therefore, the first spacer chip is closer to the optical interface than is the electronic semiconductor chip to the optical interface. In a specific implementation, the photonic semiconductor chip wafer is set on a wafer ring to perform the mounting and the following processes, and any residual materials (e.g., flux for soldering) used for the mounting process may be removed before proceeding to the following processes. Further, after the mounting of the electronic semiconductor chip and a spacer chip, an underfill may be formed in a space between the electronic semiconductor chip and the photonic semiconductor chip wafer.

In step 303, a photo resist pattern (may be referred to as "first photo resist pattern") is formed so as to cover a peripheral region of the first surface including the optical interface. In the multi-chip fabrication case, the photo resist pattern is formed so as to cover the optical interface for each of the semiconductor devices. In a specific implementation, the photo resist pattern may be in contact with side surfaces of the electronic semiconductor chip and the first spacer chip that face outward.

In step 304, a mold (may be referred to as "first mold") is formed in a space surrounded by the first photo resist pattern. In a specific implementation, the first mold is formed on top of upper surfaces of the electronic semiconductor chip and the first spacer chip and in a space between the electronic semiconductor chip and the first spacer chip. In a specific implementation, the first mold is poured into the space surrounded by the first photo resist pattern in a fluid form and then solidified.

In step 305, the first mold is grinded such that the electronic semiconductor chip and the first spacer chip are exposed. In a specific implementation, an upper portion of the first photo resist pattern and an upper portion of the first mold may be removed during the process of step 305. In step 306, the first photo resist pattern that remains after step 305 is removed using a suitable applicable method such as wet stripping.

In step 307, the carrier wafer is removed from the second surface of the photonic semiconductor chip wafer. In a specific implementation, to remove the carrier wafer from the second surface of the photonic semiconductor chip wafer, the facet is flipped so that the carrier wafer faces upward. Further, to enhance the mechanical strength of the facet, which is also beneficial for the flipping, a dummy chip (may be referred to as "second spacer chip") may be mounted on the exposed upper surfaces of the electronic semiconductor chip and the first spacer chip before removal of the carrier wafer.

After step 307, in the multi-chip fabrication, the facet (i.e., the photonic semiconductor chip wafer on which the above-mentioned components are mounted) is diced into a plurality of pieces. At least one of the pieces is a semiconductor chip stack including the electronic semiconductor chip and the first spacer chip on a photonic semiconductor chip.

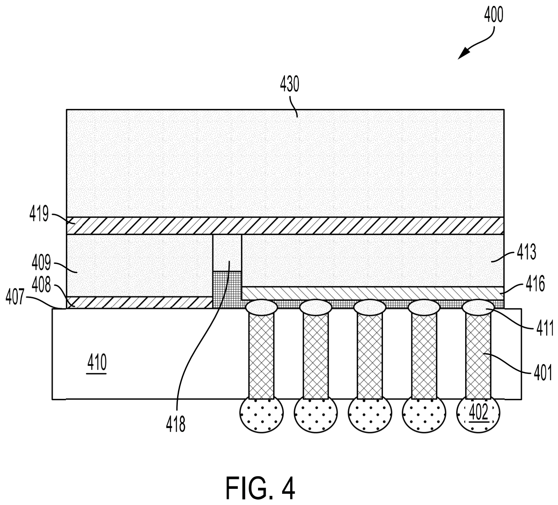

Fig. 4 schematically illustrates a semiconductor chip stack 400 manufactured using a method according to an embodiment. In a specific implementation, the semiconductor chip stack 400 may be manufactured through process steps illustrated in Figs. 1A-1C and/or the method 300 illustrated in Fig. 3. The semiconductor chip stack 400 includes a photonic semiconductor chip 410 having a plurality of pads 411 on an upper surface thereof and a plurality of pads 402 on a lower surface thereof. The plurality of pads 402 is electrically connected to the pads 411 through vias 401, respectively. On the upper surface of the photonic semiconductor chip 410, an electronic semiconductor chip 413 is disposed with an underfill 416 therebetween, and a first spacer chip 409 is disposed with a die attach film (DAF) 408 therebetween. An upper surface of the electronic semiconductor chip 413 may be flush with an upper surface of the first spacer chip 409. Further, a mold 418 is formed between a side surface of the electronic semiconductor chip 413 and a side surface of the first spacer chip 409 that face each other. On an exposed region of the upper surface of the photonic semiconductor chip 410 that is adjacent to the DAF 408, an optical interface 407 is provided. In a specific implementation, a residual photoresist pattern may exist on or around the optical interface 407, which may reasonably suggest use of a photoresist pattern during the manufacturing process of the semiconductor chip stack 400. On the upper surfaces of the electronic semiconductor chip 413 and the first spacer chip 409, a second spacer chip 430 is provided with a DAF 119 (e.g., high K DAF) therebetween.

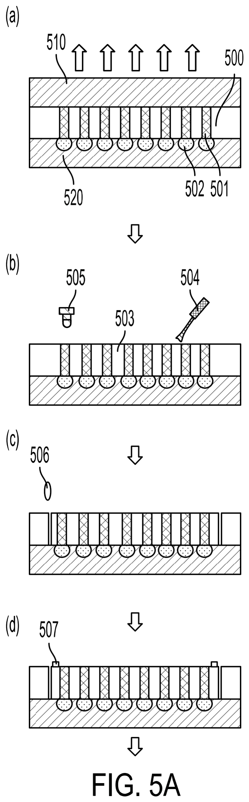

Figs. 5A-5D schematically illustrate process steps of a method for manufacturing a semiconductor device (e.g., CoWoS) including a semiconductor chip stack, according to an embodiment. In a specific implementation, the semiconductor chip stack prepared through the above-presented method described with reference to Fig. 1A-1C and/or the method 400 described with reference to Fig. 4 is employed. As illustrated in (a) of Fig. 5A, a wafer 500 (may be referred to as an "interposer wafer") has a relatively small thickness (e.g., 50-100µm), and for that reason the interposer wafer 500 is sandwiched between two carrier wafers (i.e., a third carrier wafer 510 and a fourth carrier wafer 520) and coupled to the two carrier wafers. The interposer wafer 500 includes a plurality of vias 501 and a plurality of pads 502 corresponding to the vias 501, respectively, for electrical connection. Then, at a process step shown in (a) of Fig. 5A, an upper one of the carrier wafers (i.e., the third carrier wafer 510) is removed (e.g., debonded) to expose an upper surface 503 of the interposer wafer 500 for mounting one or more semiconductor chip stacks and the other component chips in the later process steps. At a process step shown in (b) of Fig. 5A, the exposed upper surface 503 of the interposer wafer is scrubbed with a scrubber 504 to remove any unnecessary residue of the removed carrier wafer 510 or glues used for bonding. The exposed upper surface 503 of the interposer wafer 500 is also inspected to find any defects by an optical inspector 505 (e.g., a camera), which may be suitably performed automatically, i.e., automatic optical inspection (AOI).

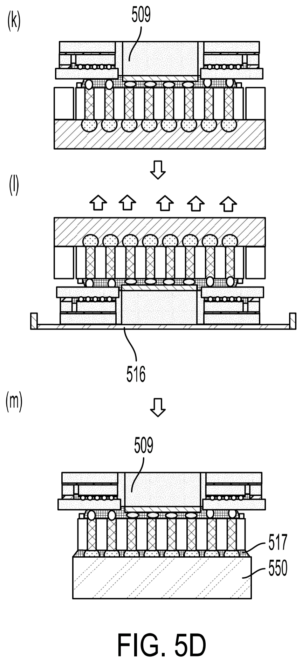

Next, at a process step shown in (c) of Fig. 5A, the interposer wafer is cut into a center piece and a peripheral piece surrounding the center piece, without cutting the lower carrier wafer 520 (i.e., the fourth carrier wafer 520 ) coupled to the lower surface of the interposer waver 500 into multiple pieces. The peripheral piece is separated in the later process step (e.g., the process step shown in (l) of Fig. 5D). Further, at a process step shown in (d) of Fig. 5D, a microdam 507 is formed, which is used to block an underfill 513 that is later formed on the upper surface 503 of the interposer wafer 500, in the center piece.

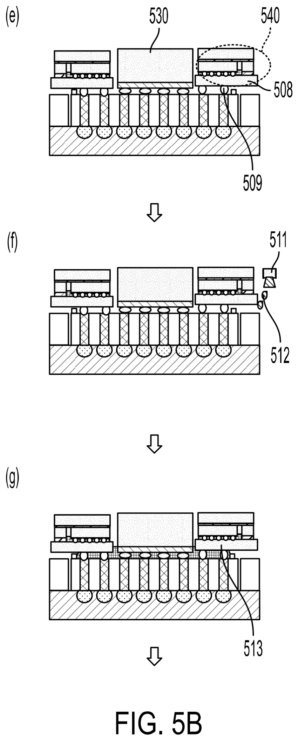

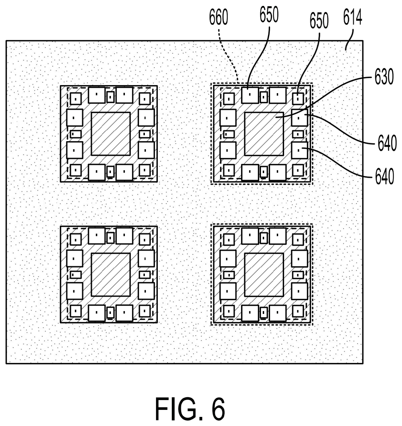

Subsequently, at a process step shown in (e) of Fig. 5B, various components, including a semiconductor chip stack 540 and a controller semiconductor chip 530 (e.g., ASIC), are mounted on the upper surface 503 of the interposer wafer 500. More specifically, the various components are mounted on the center piece of the interposer wafer 500 so that pads of the various components (e.g., pads 508 of the semiconductor chip stack 540) are connected to pads on the upper surface 503 of the interposer wafer 500 with solder joints 509. In the mounting, an optical interface of a photonic semiconductor chip (see, e.g., Fig. 4) included in the semiconductor chip stack 540 is located above the peripheral piece. Further, in a specific implementation, the controller semiconductor chip 530 is placed substantially at a center of the center piece of the interposer wafer 500 and a plurality of semiconductor chip stacks 540 (e.g., optical engines) are placed around the controller semiconductor chip 530. In an example, two semiconductor chip stacks 540 are placed adjacent to each side of the controller semiconductor chip (see Fig. 6 to be described below).

Next, at a process step shown in (f) of Fig. 5B, a flux, which is used for soldering in the previous step, is removed from the upper surface 503 of the interposer wafer 500. Although any applicable method can be employed for the flux cleaning, in a specific implementation, a liquid chemical 512 (e.g., isopropyl alcohol) may be dispensed from a shower dispenser 511 onto the upper surface 503 of the interposer wafer 500. At a process step shown in (g) of Fig. 5B, an underfill 513 is formed in a space between the interposer wafer 500 and the semiconductor chip stack(s) 540 and between the interposer wafer 500 and the controller semiconductor chip 530 so as to cover around the solder joints 509 therebetween. The underfill 513 is prevented from spreading beyond the microdam 507 formed in the above-described process step. In a specific implementation, the underfill 513 is dispensed into a space between the controller semiconductor chip 530 and the semiconductor chip stack(s) 540 and formed so as not top up the controller semiconductor chip 530 and the semiconductor chip stack(s) 540 up to the upper surfaces thereof.

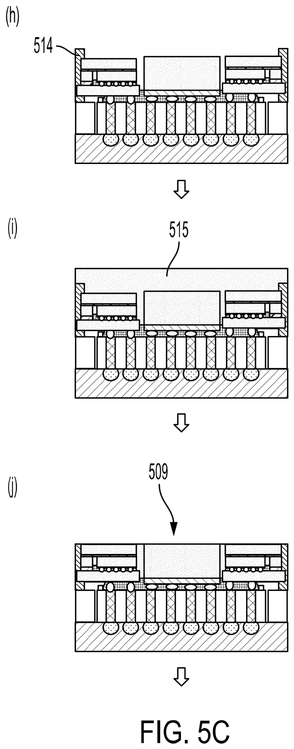

Subsequently, at a process step shown in (h) of Fig. 5C, a photoresist (may be referred as "PR") is formed on the upper surface 503 of the interposer wafer 500 using an applicable method, such as spin coating and the photoresist is patterned into a patterned photo resist 514 so as to remain on the peripheral piece of the interposer wafer 500. The patterned photoresist 514 (may be referred to as "photoresist pattern") is formed also to cover the outer side surfaces of the one or more semiconductor chip stacks 540 mounted on the interposer wafer 500. More specifically, the photoresist pattern 514 is formed so as to cover the optical interface of each of the one or more semiconductor chip stacks 540. In a specific implementation, a height of the patterned photoresist 514 is higher than a height of the various components, such as the semiconductor chip stacks 540 and the controller semiconductor chip 530.

Next, at a process step shown in (i) of Fig. 5C, a mold 515 is formed in a space surrounded by the photoresist pattern 514. A fluid material of the mold 515 is dispensed in the space and solidified. In forming the mold 515, the patterned photoresist 514 can serve as a dam to avoid the fluid material of the mold 515 from flowing out of the space. For the purpose of protecting the susceptible regions (e.g., the optical interface) from the mold 515 or any influence during the formation of the mold 515, the material of the photoresist preferably has a high glass transition temperature so that the patterned photoresist 514 can withstand a high temperature employed to cure the mold 515. In a specific implementation, a height of the formed mold 515 is higher than the height of the patterned photoresist 514.

At a process step shown in (j) of Fig. 5C, the mold 515 is grinded to expose the upper surface of the one or more semiconductor chip stacks 540 and the upper surface of the controller semiconductor chip 530. In a case where the patterned photoresist 514 is taller than the semiconductor chip stacks 540 and/or the controller semiconductor chip 530, an upper part of the patterned photoresist 514 is grinded and removed together with the mold 515. Further, in a specific implementation, the upper surfaces of the semiconductor chip stacks 540 and the controller semiconductor chip 530 may also be slightly grinded.

Subsequently, at a process step shown in (k) of Fig. 5D, the patterned photoresist 514 is removed by a suitable method, such as wet stripping, which allows for less residue of the material of the photoresist 514 on the optical interface(s).

Next, at a process step shown in (1l) of Fig. 5D, the facet being processed is flipped and mounted on a tape frame 516, so that a surface of the remaining carrier wafer (i.e., the fourth carrier wafer 520), which is still coupled to the interposer wafer 500, faces above. That is, the surfaces of the semiconductor chip stack(s) 540 and the controller semiconductor chip 530 facing away from the interposer wafer 500 is mounted on the tape frame 516. Further, the remaining carrier wafer 520 is removed (e.g., debonded) from the rest of the components, and any residue (e.g., a residual glue) on the now upper surface of the interposer wafer 500 is removed. At this process step, the peripheral piece of the interposer wafer 500 may come off from the center piece of the interposer wafer 500 together with the carrier wafer 520. Since the peripheral piece of the interposer wafer 500 has no physical connection with the central piece of the interposer wafer 500 (due to the cutting process in (c) of Fig. 5A) and with the interposer wafer 500, removal of the fourth carrier wafer 520 leads to removal of the peripheral piece as well.

As a process step shown in (m) of Fig. 5D, the facet is removed from the tape fame 516 and the surface of the interposer wafer 500 from which the fourth carrier wafer 520 has been removed is bonded to a substrate 550, to manufacture a semiconductor device (e.g., CoWoS). In a specific implementation, for the bonding to the substrate 550, pads 502 of the interposer wafer 500 are bonded to pads of the substrate 520 with solder joints, and a space between the interposer wafer 500 and the substrate 520 is filled with an underfill 517, which can be the same material for the underfill 513 (and/or the underfill 116 in Fig.1B).

Fig. 6 schematically illustrates a plan view of an interposer wafer for the semiconductor device in a process step of forming a photoresist pattern. An interposer wafer in the process step of forming a photoresist pattern 614 includes a plurality of (e.g., four) regions corresponding to four semiconductor devices (e.g., four CoWoS). In each of the plurality of regions, a corresponding semiconductor device stack 660, which includes a controller semiconductor chip 630, two semiconductor chip stacks 640 on each side of the controller semiconductor chip 630, and other chips 650 (e.g., spacer chips), is mounted. In a specific implementation, the photoresist pattern 614 is formed so as so surround external side surfaces of each of the semiconductor chip stacks 640. In the example of Fig. 6, four semiconductor devices (e.g., four CoWoS) are collectively formed, and later they are diced into individual semiconductor devices.

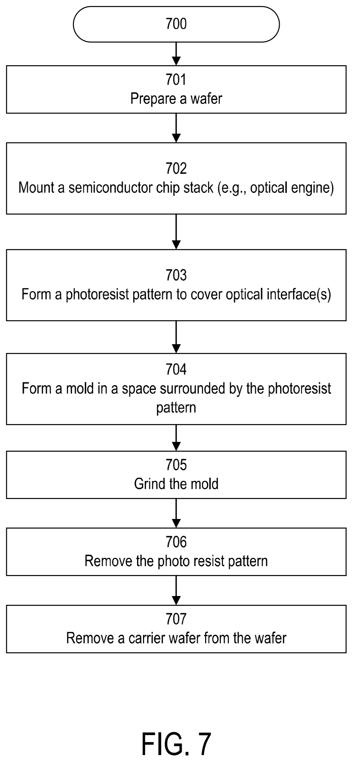

Fig. 7 is a flow chart illustrating process steps of a method 700 for manufacturing a semiconductor device (e.g., CoWoS) according to an embodiment. In a specific implementation, the process steps of the method 700 illustrated in Fig. 7 correspond to the process steps described with reference to Figs. 5A-5D, respectively, but may be different therefrom. The method 700 includes step 701, where a wafer (e.g., an interposer wafer) is prepared. The prepared wafer has a first surface (e.g., a lower surface) coupled to a carrier wafer and a second surface (e.g., an upper surface) that is opposite to the first surface. The second surface may be cleaned (e.g., scrubbed). In a specific implementation, the wafer is prepared for a plurality of semiconductor devices (e.g., CoWoSs), and in that case (may be referred to as "multi-device fabrication case"), the subsequent steps may be performed for each of the semiconductor devices until a dicing process. Further, in a specific implementation, the wafer is cut into a center piece and a peripheral piece without cutting the carrier wafer into multiple pieces, and a microdam may be formed along a periphery of the center piece. In this case, the semiconductor chip stack is mounted on the center piece of the wafer with the optical interface thereof being located above the peripheral piece.

In step 702, a semiconductor chip stack (e.g., optical engine) is mounted on the second surface of the wafer. The mounted semiconductor chip stack includes a photonic semiconductor chip, an electronic semiconductor chip, a first spacer chip, and a first mold. The mounted semiconductor chip stack may be the one manufactured through the process steps set forth with reference to Figs. 1A-1C and/or Fig. 3, or the one shown in Fig. 4. That is, the photonic semiconductor chip has a surface on which an optical interface connectable to an optical fiber is provided at an edge thereof. The electronic semiconductor chip is mounted on the surface of the photonic semiconductor chip. The first spacer chip is mounted on the surface of the photonic semiconductor chip between the optical interface and the electronic semiconductor chip. The first mold is between the electronic semiconductor chip and the first spacer chip. In a specific implementation, a controller semiconductor chip is also mounted on the wafer and a plurality of semiconductor chip stacks are mounted around the controller semiconductor chip. Further, in a specific implementation, any residual materials (e.g., flux for soldering) used for the mounting process may be removed before proceeding to the following processes. Further, after the mounting of the semiconductor chip stack(s), an underfill may be formed in a space between the semiconductor chip stack(s) and the wafer, that is, so as to a surface of the semiconductor chip stack facing the wafer.

In step 703, a photo resist pattern is formed so as to cover a peripheral region of the first surface including the optical interface of the semiconductor chip stack. When the wafer is cut into the center piece and the peripheral piece, the photo resist pattern may be formed at outer edges of the peripheral piece. In the multi-device fabrication case, the photo resist pattern is formed so as to cover the optical interface of each of the semiconductor chip stacks. In a specific implementation, the photo resist pattern may be in contact with side surfaces of the electronic semiconductor chip and the first spacer chip that face outward.

In step 704, a mold (may be referred to as "second mold") is formed in a space surrounded by the photo resist pattern. In a specific implementation, the second mold is formed on top of upper surfaces of the semiconductor chip stack(s) and the controller semiconductor chip and in a space between the semiconductor chip stack(s) (and the controller semiconductor chip, if any). In a specific implementation, the second mold is poured into the space surrounded by the photo resist pattern in a fluid form and then solidified.

In step 705, the second mold is grinded such that the semiconductor chip stack(s) (and the controller semiconductor chip, if any) are exposed. In a specific implementation, an upper portion of the photo resist pattern and an upper portion of the second mold may be removed during the process of step 705. In step 706, the photo resist pattern that remains after step 705 is removed using a suitable applicable method such as wet stripping.

In step 707, the carrier wafer is removed from the first surface of the wafer. In a specific implementation, to remove the carrier wafer from the first surface of the wafer, the facet is flipped so that the carrier wafer faces upward. Further, in the case where the wafer is cut before the mounting process in step 702, the peripheral piece of the wafer may be removed together with the carrier wafer during step 707. Moreover, in the multi-device fabrication case, the removal of the carrier wafer produces multiple

After step 307, the removal of the carrier wafer produces multiple pieces, and at least one of the multiple pieces is a semiconductor device including one or more semiconductor chip stacks (e.g., optical engines). Further, after step 307, the individualized semiconductor device may be bonded to a substrate.

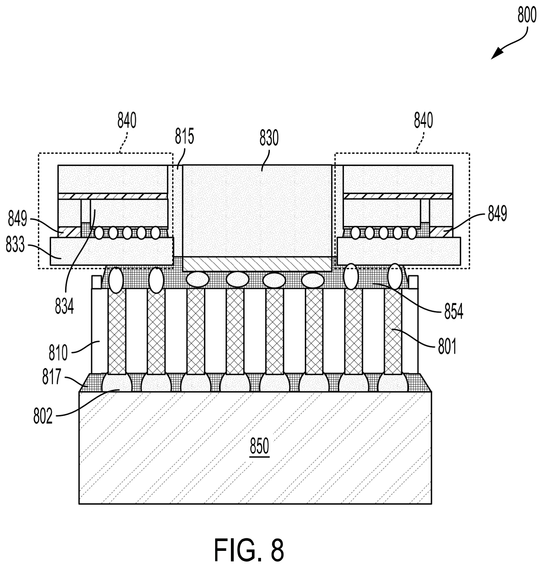

Fig. 8 schematically illustrates a semiconductor device (e.g., CoWoS) 800 manufactured using a method according to an embodiment. In a specific implementation, the semiconductor chip stack 800 may be manufactured through process steps illustrated in Figs. 5A-5D and/or the method 700 illustrated in Fig. 7. The semiconductor device 800 includes a substrate 850 and an interposer wafer 810 mounted thereon with a bonding material 817 therebetween. A plurality of pads 802 of the interposer 801 is in contact with the substrate 850. The interposer wafer 810 includes a plurality of vias 801 extending through a thickness direction of the interposer wafer 810 and connected to the pads 802, respectively. On the upper surface of the interposer wafer 810, a plurality of semiconductor chip stacks 840 and a controller semiconductor chip 830 are disposed with an underfill 854 therebetween. An upper surface of the semiconductor chip stacks 840 may be flush with an upper surface of the controller semiconductor chip 830. Further, a mold 815 is formed between a side surface of the electronic semiconductor chip 413 and a side surface of the first spacer chip 409 that face each other. On an exposed region of the upper surface of a photonic semiconductor chip 833 in each of the semiconductor chip stacks 840, an optical interface 849 is provided. In a specific implementation, a residual photoresist pattern may exist on or around the optical interfaces 847, which may reasonably suggest use of a photoresist pattern during the manufacturing process of the semiconductor device 800.

The semiconductor device 800 shown in Fig. 8 has an overhanging structure for ease of optical connection between the optical interface 849 on each of the semiconductor chip stacks 840 and an optical fiber. More specifically, each of the semiconductor chip stacks 840 includes a region overhanding the interposer wafer 810, and the optical interfaces 849 are in the overhanging region. Since more clearance can be ensured around the optical interfaces 849, the connection of the optical fiber can be more reliably performed without physical contacts therearound. Further, an electronic semiconductor chip 834 of each of the semiconductor chip stacks 840 is in a region of the semiconductor chip stack 840 not overhanging the interposer wafer 810, that is, directly above the interposer wafer 810.

In the semiconductor device 800, each photonic semiconductor chip 833 is configured to communicate with an external photonic device (not shown) via an optical fiber (not shown) connected to the optical interface 849 thereof, transmitting optical signals, and the corresponding electronic semiconductor chip 834 thereon is configured to process electrical signals converted from the optical signals within the same semiconductor chip stack 840. Further, the controller semiconductor chip 830 is connected to each of the semiconductor chip stacks 840 in the same semiconductor device 800 and configured to control each of the semiconductor chip stacks 840.

Lastly, a definition and/or examples of terms used in the present disclosure are provided. A term "wafer" refers to a wafer (also called a slice or substrate), is a thin slice of semiconductor, such as a crystalline silicon, used for the fabrication of integrated circuits. A term "coupled" refers to a state of physical coupling without limiting to direct connection between elements connected. A term "semiconductor chip stack" refers to a stack of semiconductor chips. A term "photonic semiconductor chip" refers to a semiconductor chip containing one or more photonic components that form a functioning circuit and typically involves transmission or reception of optical signals. A term "electronic semiconductor chip" refers to a semiconductor chip containing one or more electronic components that form a functioning circuit and typically involves transmission or reception of electronic signals, but not optical signals. A term "edge" refers to an outside limit of an object, area, or surface, or a region next to the outside limit. A term "mold" refers to a material, such as plastics, or and/or a structure thereof, used to encapsulate many types of electronic components, such as capacitors, transistors, semiconductor chips, central processing units (CPUs), and memory devices. A term "peripheral region" refers to a region situated on an edge or periphery of an object. A term "photoresist" refers to a light-sensitive material layered onto a subject and a term "photoresist pattern" is a structure of the photoresist that has undergone a patterning process through applicable methods, such as lithography. Other terms that are not listed here are defined as reasonably understood by one of ordinary skills in the art, typically with reference to dictionary and/or encyclopedic definitions.

The previous description is provided to enable any person skilled in the art to practice the various aspects described herein. Various modifications to these aspects would be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more." Unless specifically stated otherwise, the term "some" refers to one or more. Headings and subheadings, if any, are used for convenience only and do not limit the subject disclosure.

## Claims

1. A method comprising:
preparing a wafer having a first surface coupled to a carrier wafer and a second surface opposite the first surface;
mounting a semiconductor chip stack on the second surface of the wafer, the semiconductor chip stack including:
a photonic semiconductor chip having a surface on which an optical interface connectable to an optical fiber is provided at an edge thereof;
an electronic semiconductor chip mounted on the surface of the photonic semiconductor chip;
a first spacer chip mounted on the surface of the photonic semiconductor chip between the optical interface and the electronic semiconductor chip; and
a first mold between the electronic semiconductor chip and the first spacer chip,
said mounting being performed such that the optical interface of the semiconductor chip stack is above a peripheral region on the second surface;
forming a photoresist pattern to cover the peripheral region of the second surface and a region of the semiconductor chip stack that is thereabove and includes the optical interface;
forming a second mold in a space surrounded by the photoresist pattern;
grinding the second mold such that the semiconductor chip stack is exposed;
removing the photoresist pattern after said grinding the second mold; and
removing the carrier wafer from the first surface of the wafer.

2. The method according to claim 1, further comprising:
after said mounting the semiconductor chip stack and before said forming the photoresist pattern, forming an underfill to cover a surface of the semiconductor chip stack facing the wafer.

3. The method according to claim 1 or 2, wherein
a part of the photoresist pattern is grinded during said grinding the second mold.

4. The method according to any one of the claims 1 to 3, further comprising:
after said preparing the wafer, cutting the wafer into a center piece and a peripheral piece surrounding the center piece, without cutting the carrier wafer into multiple pieces,
wherein the semiconductor chip stack is mounted on the center piece of the wafer with the optical interface being located above the peripheral piece;
wherein in particular
the peripheral piece of the wafer is removed together with the carrier wafer during said removing the carrier wafer.

5. The method according to any one of the claims 1 to 4, further comprising:
mounting a controller semiconductor chip on the second surface of the wafer, before said forming the photoresist pattern.

6. The method according to any one of the claims 1 to 5, further comprising:
after said removing the carrier wafer, bonding the wafer on which the semiconductor chip stack is mounted, to a substrate.

7. A method comprising:
preparing a photonic semiconductor chip wafer having a first surface on which an optical interface connectable to an optical fiber is provided at an edge and a second surface that is opposite to the first surface and coupled to a first carrier wafer;
mounting an electronic semiconductor chip and a first spacer chip on the first surface of the photonic semiconductor chip wafer, such that the first spacer chip is between the optical interface and the electronic semiconductor chip;
forming a first photoresist pattern to cover a peripheral region of the first surface including the optical interface;
forming a first mold in a space surrounded by the first photoresist pattern;
grinding the first mold such that the electronic semiconductor chip and the first spacer chip are exposed;
removing the first photoresist pattern after said grinding; and
removing the first carrier wafer from the second surface of the photonic semiconductor chip wafer after said removing the first photo resist pattern.

8. The method according to claim 7, further comprising:
after said mounting the electronic semiconductor chip and the first spacer chip and before said forming the first photoresist pattern, forming an underfill to cover a surface of the electronic semiconductor chip facing the photonic semiconductor chip wafer.

9. The method according to claim 7 or 8, further comprising:
after said removing the first photoresist pattern, mounting a second spacer chip on the electronic semiconductor chip and the first spacer chip;
wherein in particular
said removing the first carrier wafer is performed after said mounting the second spacer chip.

10. The method according to any one of the claims 7 to 9, wherein
a part of the first photoresist pattern is grinded during said grinding the first mold.

11. The method according to any one of the claims 7 to 10, further comprising:
after removing the first carrier wafer, dicing the photonic semiconductor chip wafer into a plurality of pieces, one of which being a photonic semiconductor chip of a semiconductor chip stack including the electronic semiconductor chip and the first spacer chip;
wherein in particular
the method further comprises:
preparing a wafer having a third surface coupled to a second carrier wafer and a fourth surface opposite the third surface;
mounting the semiconductor chip stack on the fourth surface of the wafer, such that the optical interface of the semiconductor chip stack is above a peripheral region of the fourth surface;
forming a second photoresist pattern to cover the peripheral region of the fourth surface and a region of the semiconductor chip stack that is thereabove and includes the optical interface;
forming a second mold in a space surrounded by the second photoresist pattern;
grinding the second mold such that the semiconductor chip stack is exposed;
removing the second photoresist pattern after said grinding the second mold; and
removing the second carrier wafer from the third surface of the wafer.

12. A semiconductor device comprising:
a substrate;
a wafer mounted on the substrate; and
one or more semiconductor chip stacks mounted on the wafer, each of the one or more the semiconductor chip stacks including a region overhanging the wafer, each of the one or more the semiconductor chip stacks including:
a photonic semiconductor chip having a first surface on which an optical interface connectable to an optical fiber is provided at an edge thereof, the optical interface being in the region overhanging the wafer;
an electronic semiconductor chip mounted on the first surface of the photonic semiconductor chip;
a first spacer chip mounted on the first surface of the photonic semiconductor chip between the optical interface and the electronic semiconductor chip; and
a first mold between the electronic semiconductor chip and the first spacer chip.

13. The semiconductor device according to claim 12, further comprising:
a controller semiconductor chip mounted on the wafer, wherein the one or more semiconductor chip stacks is a plurality of semiconductor chip stacks, at least one of the plurality of semiconductor chip stacks being provided on each side of the controller semiconductor chip; and
a second mold between the controller semiconductor chip and each of the plurality of semiconductor chip stacks.

14. The semiconductor device according to claim 13, wherein
at least two of the plurality of semiconductor chip stacks are provided on each side of the controller semiconductor chip;
and/or wherein
each of the one or more semiconductor chip stacks further includes a second spacer chip mounted on the electronic semiconductor chip and the first spacer chip, a surface of the second spacer chip being flush with a surface of the controller semiconductor chip.

15. The semiconductor device according to any one of the claims 12 to 14, wherein
the optical interface of each of the one or more semiconductor chip stacks is in a region of the semiconductor chip stack overhanging the substrate;
or wherein
the electronic semiconductor chip of each of the one or more semiconductor chip stacks is in a region of the semiconductor chip stack not overhanging the wafer.
